# EUROPEAN PATENT APPLICATION

(11) **EP 3 165 203 A1**
(43) Date of publication of application: **10.05.2017**
(21) Application number: 16193269.4
(22) Date of filing: 11.10.2016
(51) Int. Cl.: A61G 3/06, E04G 27/00, B29C 70/68

(54) **TRANSPORT RAMP AND METHOD FOR MANUFACTURING SUCH**

(30) Priority: 14.10.2015 SE 1551328
(71) Applicant: FEAL AB, 77468 Horndal (SE)
(72) Inventor: Karlsson, Karl-Erik, 77468 Horndal (SE)
(74) Representative: Groth & Co. KB

(57) **Abstract**

Method for the manufacture of a transport ramp (10) for the connection to an upper level with an extension to a lower level, wherein a sandwich structure (20) is provided which has a first layer (21) and a second layer (22) and an intermediate core of foam (23), at least one of said layers (21) being provided from a carbon fibre fabric pre-impregnated in a curable resin onto which a web layer (24), preferably woven, is applied to the outer surface of the layer (21), the sandwich structure (20) being stabilized by a heat treatment after which the web layer (24) is permanently removed for the formation of a surface structure in the layer (21). The invention also concerns a transport ramp manufactured according to the method.

## Description

### Technical Field

The present invention relates to light ramps for bridging over differences in height. A field of application of said transport ramps is for disabled persons.

### Background of the Invention

Traditionally, this type of transport ramps is used to drive manually and electrically driven wheelchairs and rollators thereon. It is also common that these ramps are used to move various machines and equipment.

Earlier, most of these ramps have been manufactured from extruded aluminium profiles in order to get as light a product as possible. These aluminium ramps have been provided with a pasted or painted slip protection, which itself contributes to a higher weight of the aluminium ramp.

### The Object of the Invention

The object of the present invention is to provide a transport ramp which is lighter than previously known ramps.

The object is furthermore that such a light ramp can resist at least 250 kg of load.

A further object is to, in such a ramp, provide an integrated slip protection in the surface of the ramp that does not contribute to a higher weight of the ramp.

### Summary of the Invention

By the present invention, such as this is seen in the independent claims, the above-mentioned objects are met, wherein said disadvantages have been eliminated. Suitable embodiments of the invention are defined in the dependent claims.

The invention concerns a method for the manufacture of a transport ramp for the connection to an upper level with an extension to a lower level. In the method, a sandwich structure is produced, which has at least one first layer and a second layer and an intermediate core of foam, preferably having a 15 mm core of foam of Rohacell® having the density of 51. At least one of said layers is provided from a carbon fibre fabric pre-impregnated in a curable resin, so-called "prepreg", onto which a web layer, preferably woven, is applied to the outer surface of the layer. Said web layer is of the same type as is used as drainage fabric, so-called "peel ply", but which in the present invention is used for providing a rough, anti-slip surface. The sandwich structure is stabilized by vacuum forming, which takes place in heating from room temperature to 120 °C for 1,5 h after which a cooling down to room temperature takes place for 4,5 h for a total vacuum forming time of 6 h, after which the web layer is permanently removed for the formation of a surface structure in the layer. The removal is carried out after the curing process, which preferably has been made in an autoclave under positive pressure. The given temperatures and times according to the invention may be varied as long as the final result becomes the same and approximately, both the temperatures and the times may be varied +/-10 %.

In one embodiment of the method, the second one of said layers is also provided from a carbon fibre fabric pre-impregnated in a curable resin, which second layer of the sandwich structure is stabilized by vacuum forming in heating from room temperature to 120 °C for 1,5 h after which a cooling down to room temperature takes place for 4,5 h for a total vacuum forming time of 6 h. The corresponding variation of temperature and time may also be made for this embodiment.

In one embodiment of the method, the two layers are manufactured simultaneously in the vacuum forming.

In one embodiment of the method, the surface structure is treated by grease to obtain a soil repellent surface.

In one embodiment of the method, two transport ramps are manufactured simultaneously in the vacuum forming. These two transport ramps will function as complementary units, which work together in a transportation. In this connection, one ramp may be a left-side ramp and the other ramp be a right-side ramp.

In one embodiment of the method, the connections to the upper level and to the lower level have been manufactured with angles corresponding to the difference in height between the upper and the lower level as well as to the length of the transport ramp. Thus, the angles of a ramp for a defined difference in height are greater if the ramp is short in relation to if the ramp is long. For a long ramp for this difference in height, the angles are smaller.

In one embodiment of the method, at least one edge applied essentially perpendicularly to the outer surface of the layer is formed in the transport ramp in the hot forming. Said edge is preferably entirely flat and has a constant width across the entire length thereof.

In one embodiment of the method, a second edge applied essentially perpendicularly to the outer surface of the layer is formed in the transport ramp in the hot forming. Also this edge is preferably entirely flat and has a constant width across the entire length thereof.

In one embodiment of the method, at least one of said edges is a side edge of the transport ramp. Such a side edge may be a driving-off preventing means of the transport ramp.

All of these mentioned edges also act to increase the stiffness of the transport ramp.

The invention also concerns a transport ramp for connecting between an upper level and a lower level, the transport ramp being manufactured according to any one of the methods described in this description.

### Brief Description of the Drawings

Now, the invention will be described in more detail, references being made in connection with the accompanying drawing figures. The drawing figures show only explanatory sketches intended to facilitate the understanding of the invention.
- Figure 1: schematically shows a transport ramp according to the invention.
- Figure 2: schematically shows a section through a ramp according to the invention after a first manufacturing step.
- Figure 3: schematically shows a section through a ramp according to the invention after a second manufacturing step.

### Description of the Invention

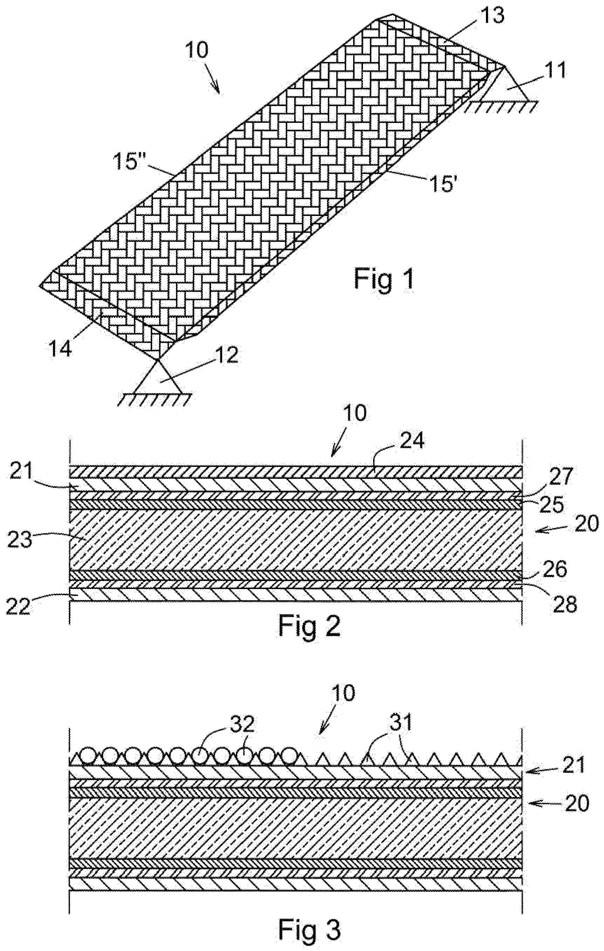

Figure 1 shows an embodiment of a transport ramp 10 intended to be connected between an upper level 11 and a lower level 12. The transport ramp is constructed of a carbon fibre material in the form of a sandwich structure. The transport ramp is provided with connections 13, 14 to the upper level 11 and to the lower level 12. According to the embodiment of the invention shown in Figure 1, the ramp is provided with side edges 15', 15", which turned downward contribute to an increase of the stiffness of the ramp. The side edges may also be directed upward and then also constitute means for eliminating driving-off from the ramp.
Figure 2 shows the sandwich structure 20 in a section through a centre portion of the ramp 10 after a core of foam 23 of Rohacell®, preferably having the density of 51, has been laminated in between two layers of pre-impregnated carbon fibre fabric, prepreg, forming a first layer 21 and a second layer 22, which two layers comprise a carbon fibre fabric of the type 2x2 twill having the weight of 200g/m². The upper side is covered with a web layer 24 in the form of a drainage fabric, peel ply, as a preparation for a slip protection, which web layer in the end is removed but leaves a slip protection pattern in the surface. Furthermore, closest to the core of foam 23 on both sides thereof, there is a GF layer 25, 26, glass fibre, applied. On these GF layers, there is a UD layer 27, 28 on each side, which is a uni-directional carbon fibre layer applied, and outside these UD layers, said first and second layers 21, 22 are placed.
Figure 3 shows a section through the ramp 10 in a subsequent manufacturing step where the web layer has been removed and a surface structure 31 has been formed in the surface layer of the ramp, which on one hand consists of the first layer 21 and the remaining surface structure 31 formed in the spaces of the fabric structure of the web layer 24. The web layer may in this connection be formed in a number of different ways, but all the ways result in remaining projections in the surface layer of the ramp. In a subsequent manufacturing step, the surface is lubricated with a type of grease 32 so that a surface that is not as susceptible to shoe or tyre print is provided. In the figure, the grease is shown by circles in the left part of the figure. The right part of the figure shows the surface without grease.

Preferably, the ramps are constructed in pairs with a 15 mm Rohacell core having a density of 51. This is laminated in with two layers of carbon fibre CF prepreg 2x2 twill 200 g/m², two layers of uni-directional carbon fibre CF UD prepreg 300 g/m², and two layers of glass fibre GF prepreg 2x2 twill 280 g/m² extra sticky, tacky.

Preferably, an autoclave is used in combination with a vacuum pump for the product and a subsequent positive pressure in the autoclave in the heat treatment so that the curing and the structure should become as homogeneous as possible.

## Claims

1. Method for the manufacture of a transport ramp (10) for connecting, by connections (13, 14), to an upper level (11) with an extension to a lower level (12), **characterized in that** a sandwich structure (20) is provided which has a first layer (21) and a second layer (22) and an intermediate core of foam (23), at least one of said layers (21, 22) being provided from a carbon fibre fabric pre-impregnated in a curable resin onto which a web layer (24), preferably woven, is applied to the outer surface of the layer (21, 22), the sandwich structure (20) being stabilized by heat treatment under a positive pressure, for instance by vacuum forming in a pressurized autoclave, after which the web layer (24) is permanently removed for the formation of a surface structure (31) in the layer (21, 22).

2. Method according to claim 1, **characterized in that** the heat treatment takes place by heating from room temperature to 120 °C for 1,5 h after which a cooling down to room temperature takes place for 4,5 h for a total vacuum forming time of 6 h.

3. Method according to any one of claims 1-2, **characterized in that** the second one of said layers (22) also is provided from a carbon fibre fabric pre-impregnated in a curable resin, and that the two layers (21, 22) are simultaneously manufactured in the vacuum forming.

4. Method according to any one of claims 1-3, **characterized in that** the surface structure (31) is treated by grease (32) to obtain a soil repellent surface.

5. Method according to any one of claims 1-4, **characterized in that** two transport ramps are simultaneously manufactured in the vacuum forming.

6. Method according to any one of claims 1-5, **characterized in that** the connections (13, 14) to the upper level (11) and to the lower level (12) have been given angles corresponding to the difference in height between the upper and the lower level (11, 12) as well as to the length of the transport ramp (10).

7. Method according to any one of claims 1-6, **characterized in that** at least one edge (15') applied essentially perpendicularly to the outer surface of the layer is formed in the transport ramp (10) in the hot forming.

8. Method according to claim 7, **characterized in that** a second edge (15") applied essentially perpendicularly to the outer surface of the layer is formed in the transport ramp in the hot forming.

9. Method according to any one of claims 7-8, **characterized in that** at least one of said edges (15', 15") is a side edge of the transport ramp (10).

10. Transport ramp (10) for connecting between an upper level (11) and a lower level (12), **characterized in that** the transport ramp (10) comprises a sandwich structure (20) which has a first layer (21) and a second layer (22) and an intermediate core of foam (23), at least one of said layers (21, 22) being provided from a carbon fibre fabric pre-impregnated in a curable resin onto which a surface structure (31) in the layer (21, 22) is formed after a web layer (24), preferably woven, has been applied on the outer surface of the layer (21, 22), the sandwich structure (20) having been stabilized by heat treatment under a positive pressure, for instance by vacuum forming in a pressurized autoclave, after which the web layer (24) has been permanently removed.

11. Transport ramp according to claim 10, **characterized in that** the second one of said layers (22) also is provided from a carbon fibre fabric pre-impregnated in a curable resin, and that the two layers (21, 22) are simultaneously manufactured in a vacuum forming.

12. Transport ramp according to any one of claims 10-11, **characterized in that** the surface structure (31) is treated by grease (32) to obtain a soil repellent surface.

13. Transport ramp according to any one of claims 10-12, **characterized in that** a connection (13) to the upper level (11) and a connection (14) to the lower level (12) are formed with angles corresponding to the difference in height between the upper and the lower level (11, 12) as well as to the length of the transport ramp (10).

14. Transport ramp according to any one of claims 10-13, **characterized in that** at least one edge (15') applied essentially perpendicular to the outer surface of the layer (21, 22) is formed in the transport ramp (10) in the hot forming.

15. Transport ramp according to claim 14, **characterized in that** a second edge (15") applied essentially perpendicular to the outer surface of the layer (21, 22) is formed in the transport ramp (10) in the hot forming.

16. Method according to any one of claims 14-15, **characterized in that** at least one edge (15', 15") is a side edge of the transport ramp (10).
